# EUROPEAN PATENT APPLICATION

(11) **EP 4 542 799 A1**
(43) Date of publication of application: **23.04.2025**
(21) Application number: 23742349.6
(22) Date of filing: 12.06.2023
(51) Int. Cl.: H02B 13/035, H01R 13/18, H01R 31/06

(54) **ELECTRICAL INTERCONNECTION DEVICE**

(30) Priority: 15.06.2022 ES 202231004 U
(71) Applicant: Ormazabal Y Cia S.L.U., 48140 Igorre (Bizkaia) (ES)
(72) Inventor: RANEDO TORRES, Luis, 48140 IGORRE (Bizkaia) (ES); SEBASTIÁN MARTIN, Sergio, 48140 IGORRE (Bizkaia) (ES); SANCHEZ RUIZ, Juan Antonio, 48140 IGORRE (Bizkaia) (ES)
(74) Representative: Herrero & Asociados, S.L.
(86) International application number: PCT/ES2023/070384
(87) International publication number: WO 2023/242457

(57) **Abstract**

The present invention refers to an electrical interconnection device (1) used in the distribution of electrical energy, including electrical transformation centers and substations. This device facilitates the interconnection of at least a first electrical element (2) and a second electrical element (3), such as a switch and a fuse, even in gas atmospheres with low dielectric properties. This device is characterized by having at least one input connection point (4, 4') and one output connection point (5, 5'), electrically interconnecting the two elements. The device (1) is housed in a part (7) made of insulating material, wherein the connection points (4, 4', 5, 5') and at least one electrical connection (8, 9) are encapsulated. With this invention, it is expected to solve problems associated with the electrical interconnection in said installations.

## Description

### OBJECT OF THE INVENTION

The invention refers to an electrical interconnection device between a first electrical element and a second electrical element, configured in a single part or subassembly of insulating material, such as thermoplastic or thermosetting material, for application in medium and high voltage electrical power distribution facilities, and specifically in gas-insulated electrical switchgear cells.

### BACKGROUND OF THE INVENTION

The electrical switchgear used in electricity distribution networks is installed in some usually metallic enclosures, called cells. Said electrical switchgear comprises electrical operating elements, such as switches or disconnectors, which perform the functions of breaking / connecting, disconnecting and grounding the installation. In this way, in cases of, for example, a fault in the distribution line, a cut due to works, maintenance or optimization of load distribution, such electrical operating elements r can be activated to obtain the desired distribution of electrical energy, prevent consumers from losing voltage or guarantee the protection of people and electrical equipment, such as transformers. The electrical switchgear can also comprise other electrical protection elements such as fuses, which act quickly in the event of a short circuit, effectively protecting the electrical switchgear and electrical equipment, such as distribution transformers, against dynamic effects and thermal short circuit. Automatic switches, with different cutting technologies, such as vacuum switches, gas blown switches, etc., can also be cited as examples of protection elements.

Therefore, an enclosure that incorporates the electrical switchgear can comprise various electrical elements, such as switches, disconnectors and fuses, which are electrically interconnected with each other inside said gas-insulated enclosure. Generally, the switch is installed between at least one main circuit bus and the fuse, while the fuse is installed between the switch and at least one branch bus. The electrical interconnection between the different electrical elements comprising an electrical switchgear enclosure is carried out by means of electrical connections that allow the phases of a first electrical element to be electrically connected with the phases of a second electrical element. These electrical connections usually include electrical conductors that must maintain a certain safety distance from each other, which is called the distance between phases, to avoid the generation of an electric arc between live parts of different phases, between phase and ground live parts, which implies a necessary space within the enclosure of the electrical switchgear to carry out this electrical interconnection between the different electrical elements. Likewise, these electrical connections must be designed in such a way that they can withstand thermal stresses and electrodynamic stresses due to the passage of short-circuit currents caused by electrical faults in the electrical network.

At present, the electrical elements that comprise the electrical switchgear, such as the aforementioned switches, disconnectors and fuses, including the electrical interconnection between said different electrical elements, the main circuit bars and the branch busbars, all of them are incorporated in a metallic enclosure isolated in a gas, such as air, sulfur hexafluoride (SF6), dry air, nitrogen, CO2, etc. The purpose of the insulating gas is to increase the dielectric capacity of the medium and thus make it difficult for the electric arc to appear in order to be able to reduce the distance between phases and thus achieve a compact enclosure that is insensitive to external or environmental conditions such as contamination or moisture.

As previously mentioned, one of the objectives of using an insulating gas is to be able to reduce the distance between phases, that is, the distance between the live or active parts under voltage, such as the distance between the busbars of the main circuit, between the branch busbars or between the electrical conductors of the interconnection between electrical elements inside the enclosure, in order to achieve a more compact enclosure. Depending on the insulating gas used, due to its dielectric strength, the distances between phases will be greater or less, which gives rise to a more or less bulky electrical switchgear.

As an alternative to using a gas as an insulating medium and which has a great environmental impact, it is common for part of this electrical switchgear to be encapsulated in solid insulation, such as insulating resin, thus reducing the distance between phases. In short, the electrical switchgear is insulated in an insulating medium with high electrical resistance and a compact structure, managing to reduce the insulation distance between the different elements that make up the switchgear and the size of the installations.

In this sense, examples can be cited in which solid insulation is used as an insulating medium in electrical switchgear. As an example, it is worth mentioning the patent application WO0150563A1 that refers to a plurality of insulating resin bodies, wherein various electrical elements are encapsulated, such as vacuum switches: some, corresponding to the connection-disconnection-grounding functions, are encapsulated in an insulating body together with their respective actuators, while in a different insulating body the vacuum switch that performs the breaking-connection functions is encapsulated together with its corresponding actuator. Likewise, the branch busbars and the main circuit bars are also encapsulated in independent insulating bodies. Each of these independent insulating bodies is installed inside a different compartment of the cell, joining said insulating bodies by means of bushings that are part of the insulating bodies themselves.

However, one of the drawbacks of the invention described in WO0150563A1 is the need to encapsulate all the electrical elements and integrate said encapsulations in different compartments within a cell, assuming an increase in the dimensions of the electrical switchgear, thus creating space problems within electrical distribution installations. In addition thereto, there is the considerable cost and weight due to the large amount of resin that is necessary to encapsulate all the electrical elements and the long manufacturing time, as well as the possible problems of partial discharges that may arise due to the fact that in the encapsulation process, gaps or air bubbles can be created between the different surfaces, which could cause partial discharges that would degrade the insulating materials and could end up with the dielectric breakdown of the insulating medium.

In addition to the cited example, other examples can be cited in which solid insulation is used as an insulation medium in electrical switchgear, such as CN207896544U, CN205911661U, CN205901163U, CN106329320B, CN205753147U, CN105846335B, WO02082606 A1 and EP0393733A1, etc., which have similar disadvantages to those already mentioned for WO0150563A1.

### DESCRIPTION OF THE INVENTION

The present invention refers to an electrical interconnection device for application in electrical power distribution facilities such as, for example, electrical transformation centers, distribution centers, substations, etc., specifically for application in electrical switchgear that is installed in gas-insulated enclosures or cells, and whose purpose is to electrically interconnect at least one first electrical element with at least one second electrical element, such as a switch with a fuse, whose electrical contacts may have different arrangements in the three dimensions, which can make their interconnection complex, and especially in gas atmospheres with low dielectric properties. In this sense, the present invention intends to solve every and each of the problems and needs mentioned above.

The electrical interconnection device comprises at least one input connection point and at least one output connection point, the at least one input connection point being electrically connected to the first electrical element, for example a switch, and the at least one least one output connection point electrically connected to the second electrical element, for example a fuse, wherein the electrical interconnection device is configured in a part made of insulating material or insulated with an insulating material incorporating said input and output connection points. In the same part of the electrical interconnection device, at least one electrical connection is also incorporated between said input and output connection points. The part that constitutes the electrical interconnection device can be made of thermoplastic or thermostable material, wherein the input and output connection points are encapsulated, as well as the electrical connections between said input and output connection points. This part that constitutes the electrical interconnection device, and which is materialized in solid insulation with high electrical resistance and a compact structure, is the part that electrically interconnects the first electrical element with the second electrical element, so that the distance of insulation between the previously mentioned electrical connections and corresponding to the different phases is reduced, and therefore the size of the enclosures that incorporate the electrical switchgear is reduced.

As long as the distances between the input connection points and between the output connection points are maintained, the electrical interconnection device of the invention allows a modular assembly of the electrical elements that comprise the electrical switchgear, that is, keeping the distances between said input connection points and between said output connection points and matching with the connection points of the electrical elements, allows the electrical connection between different modules or types of electrical elements (such as between a switch and a fuse , between a switch and a disconnector, etc.), thus making it possible to obtain different configurations according to the needs.

Likewise, the electrical interconnection device provides flexibility when connecting the phases of each of the electrical elements, configuring the input connection points and output connection points according to interests, that is, the phase order of the first electrical element and the phase order of the second electrical element do not have to coincide, for example, the phase order of the first electrical element can be R, S, T and the phase order of the second electrical element can be S, R, T. The input and output connection points of the interconnection device will be configured in such a way that they shall connect phase R of the first electrical element with phase R of the second electrical element, phase S of the first electrical element with phase S of the second electrical element and phase T of the first electrical element with phase T of the second electrical element, without having to worry about the order of phases that the first and second electrical elements may have.

Another advantage provided by the electrical interconnection device of the invention is that it allows the insulation between phases to be maintained even in an insulated enclosure under low-pressure air because it is materialized in solid insulation and because it maintains the distances between phases, thereby It avoids having to make the design conditional on compliance with the different existing national regulations for high-pressure containers and the consequent increase in the cost of electrical switchgear.

Since the electrical interconnection device is configured in a part that includes the connection points, both input and output, in a defined position, the maintenance of the insulation distances is guaranteed. Likewise, said feature ensures a correct interconnection between the electrical elements because only a single part has to be assembled to interconnect the different phases of the electrical elements.

The input and output connection points comprise an electrical connector that is connected to an electrical contact of the electrical phases of the first and second electrical element and/or of the grounding contacts of the first and second electrical element. The electrical connector comprises at least one conductive part and at least one clamping means, such as a spring that embraces and squeezes said at least one conductive part, so that the electrical connection between said at least one conductive part and the electrical contact of the electrical phases and/or of the grounding contacts is of the plug-in type. Likewise, the electrical connector can comprise a diffuser, made of conductive material or with a conductive or semiconductive surface, that surrounds the electrical connection between the electrical connector and the electrical contact in order to control the electrical field and to dissipate the heat generated in said electrical connection.

In short, by using the electrical interconnection device of the invention between a first electrical element and a second electrical element, a compact electrical switchgear is achieved, at a lower cost and insulated in a gas that allows insulation between phases or active parts under voltage. Furthermore, said interconnection device provides modularity and flexibility when configuring the electrical switchgear.

### DESCRIPTION OF THE FIGURES

Figure 1.- Shows a perspective view of the electrical interconnection device.
Figure 2.- Shows a sectioned front elevation view of the electrical interconnection device and the connection between the first electrical element and the second electrical element.
Figure 3.- Shows a sectioned side elevation view of the electrical interconnection device and the connection between the first electrical element and the second electrical element.
Figure 4.- Shows a sectional detail of the electrical connector of the electrical interconnection device.

### PREFERRED EMBODIMENT OF THE INVENTION

An example of a preferred embodiment is described below, making reference to the aforementioned figures, without this limiting or reducing the scope of protection of the present invention.

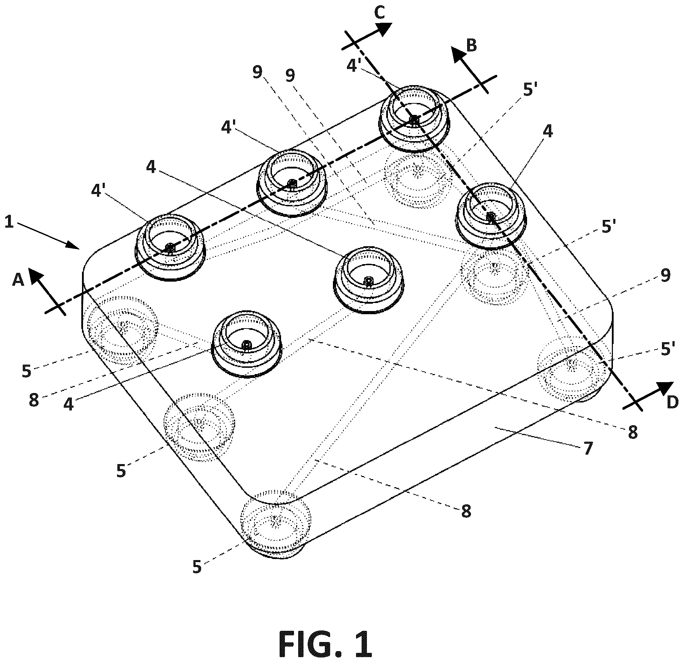

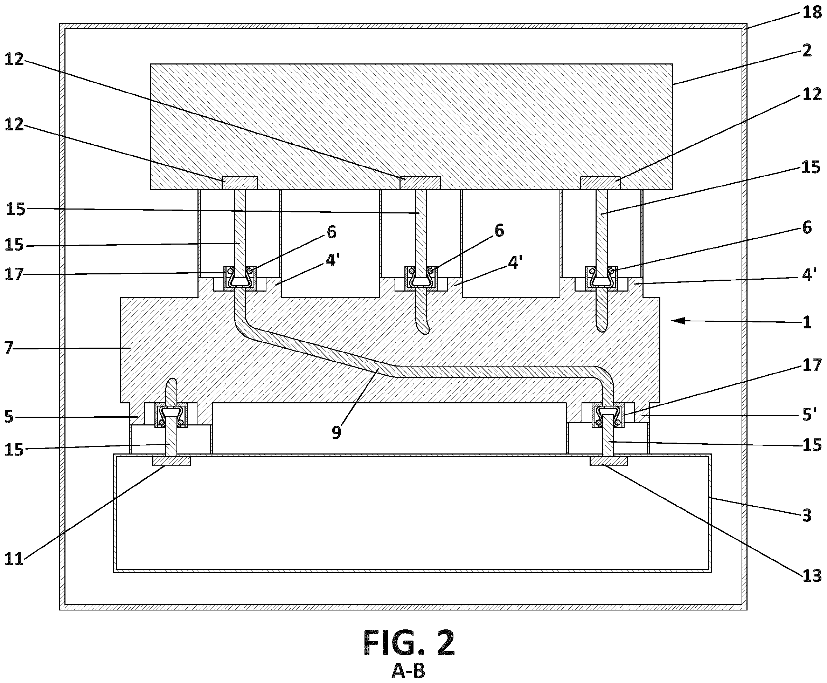

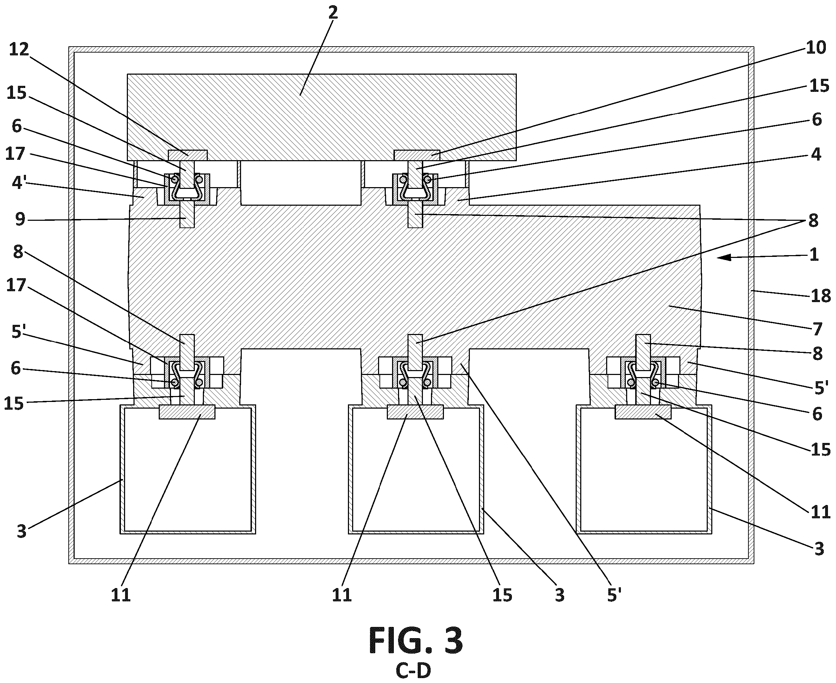

The electrical interconnection device (1) of figure 1 is applicable to an electrical switchgear that is installed in an enclosure (18) or cell isolated in a gas, such as air, dry air, N2, O2, CO2, SF6 or gas mixtures such as fluoroketones with carrier gases such as CO2, N2, O2, air or mixtures thereof, or gas mixtures such as non-flammable hydrofluoroolefins with carrier gases such as N2, O2, air dry, helium, CO2 or mixtures thereof, etc., and its purpose is to electrically interconnect at least one first electrical element (2) with at least one second electrical element (3), as shown in figures 2 and 3.

The electrical interconnection device (1) comprises at least one input connection point (4, 4') and at least one output connection point (5, 5'), the at least one input connection point (4 , 4') electrically connected to the first electrical element (2), for example a switch, and the at least one output connection point (5, 5') electrically connected to the second electrical element (3), for example a fuse, wherein the electrical interconnection device (1) is configured in a part (7) made of insulating material or insulated with an insulating material that incorporates said input and output connection points (4, 4', 5, 5'), as can be seen in figure 1. In the same part (7) of the electrical interconnection device (1) there is also incorporated at least one electrical connection (8, 9) between said input and output connection points (4, 4', 5, 5'). The part (7) that constitutes the electrical interconnection device (1) can be made of thermoplastic or thermostable material, wherein the input and output connection points (4, 4', 5, 5'), as well as the electrical connections (8, 9) between said input and output connection points (4, 4', 5, 5') are encapsulated.

As shown in figures 2 and 3, the input connection point (4) is connected to an electrical phase (10) of the first electrical element (2) and the output connection point (5) is connected to an electrical phase (11) of the second electrical element (3), the electrical phases (10, 11) being electrically connected to one another via the electrical connection (8).

Likewise, as shown in figure 2, the electrical interconnection device (1) comprises the input connection point (4') that is connected to a grounding contact (12) of the first electrical element (2) and the output connection point (5') is connected to a grounding contact (13) of the second electrical element (3), the grounding contacts (12, 13) being electrically connected one to the other through the electrical connection (9).

As shown in figures 2 and 3, the input connection point (4) is an input connection point of a phase, for example phase R, which is therefore connected to phase R of the first electrical element (2) and the output connection point (5) is an output connection point of the same phase R and that is therefore connected to the phase R of the second electrical element (3). The same occurs with phases S and T in the case where the first and second electrical elements (2, 3) are three-pole elements.

On the other hand, the input connection point (4') is a ground input connection point and is therefore connected to the ground of the first electrical element (2) and the output connection point (5') is a ground connection point and is connected to the ground of the second electrical element (3). If the first and second electrical elements (2, 3) are three-pole, two other ground input connection points and two other ground output connection points are arranged.

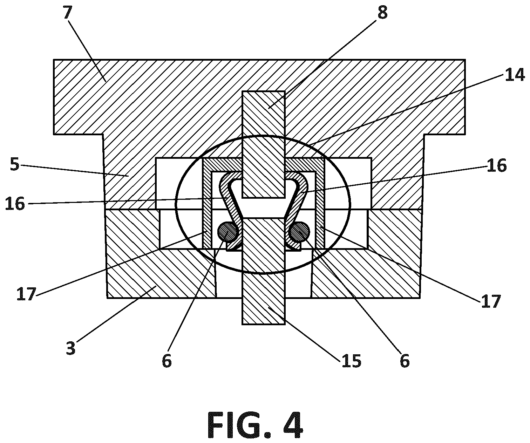

In figures 2 to 4, especially in the detail of figure 4, it can be seen how the input (4, 4') and output (5, 5') connection points comprise an electrical connector (14) that is connected to an electrical contact (15) of the electrical phases (10, 11) of the first and second electrical element (2, 3) and/or of the grounding contacts (12, 13) of the first and second electrical element (2, 3). The electrical connector (14) comprises at least one conductive part (16) and at least one clamping means (6), such as a spring that embraces and squeezes said at least one conductive part, as shown in the figure 4, so that the electrical connection between said at least one conductive part (16) and the electrical contact (15) of the electrical phases (10, 11) and/or of the grounding contacts (12, 13) is of the plug-in type. Likewise, the electrical connector (14) can comprise a diffuser (17), made of conductive material or with a conductive or semiconductive surface, which surrounds the electrical connection between the electrical connector (14) and the electrical contact (15) in order to control the electric field and to dissipate the heat generated in said electrical connection.

## Claims

1. Electrical interconnection device (1) between at least one first electrical element (2) and a second electrical element (3), **characterized in that** it comprises at least one input connection point (4, 4') and at least one outlet connection point (5, 5'), the at least one input connection point (4, 4') being electrically connected to the first electrical element (2) and the at least one output connection point (5, 5' ) electrically connected to the second electrical element (3), wherein the electrical interconnection device (1) is configured in a part (7) made of insulating material or insulated with an insulating material and wherein the input and output connection points (4, 4', 5, 5') and at least one electrical connection (8, 9) between said input (4, 4') and output (5, 5') connection points are encapsulated.

2. Electrical interconnection device (1) according to claim 1, **characterized in that** the input connection point (4) is connected to an electrical phase (10) of the first electrical element (2) and the output connection point (5) is connected to an electrical phase (11) of the second electrical element (3), the electrical phases (10, 11) being electrically connected to each other by means of the electrical connection (8).

3. Electrical interconnection device (1) according to claim 1 o 2, **characterized in that** the input connection point (4') is connected to a grounding contact (12) of the first electrical element (2) and the output connection point (5') is connected to a grounding contact (13) of the second electrical element (3), the grounding contacts (12, 13) being electrically connected to each other by means of the electrical connection (9).

4. Electrical interconnection device (1) according to any of the preceding claims, **characterized in that** the input and output connection points (4, 4', 5, 5') comprise an electrical connector (14) that is connected to an electrical contact (15) of the electrical phases (10, 11) and of the grounding contacts (12, 13).

5. Electrical interconnection device (1) according to claim 4, **characterized in that** the electrical connector (14) comprises at least one conductive part (16) and at least one clamping means (6), so that the electrical connection between said at least one conductive part (16) and the electrical contact (15) of the electrical phases (10, 11) and of the grounding contacts (12, 13) is of the plug-in type.

6. Electrical interconnection device (1) according to claim 5, **characterized in that** the electrical connector (14) comprises a diffuser (17) that surrounds the electrical connection between the electrical connector (14) and the electrical contact (15).

7. Electrical interconnection device (1) according to any of the preceding claims, **characterized in that** the part (7) is made of thermoplastic or thermostable material in which the electrical connector (14) is encapsulated.
